# EUROPEAN PATENT SPECIFICATION

(11) **EP 3 901 730 B1**
(45) Date of publication and mention of the grant of the patent: **07.10.2026**
(21) Application number: 21169974.9
(22) Date of filing: 22.04.2021
(51) Int. Cl.: G05G 5/05, G05G 1/04, G05G 9/02, G05G 5/06

(54) **SINGLE AXIS JOYSTICK**
EINACHSIGER JOYSTICK
MANETTE DE JEU À AXE UNIQUE

(30) Priority: 23.04.2020 US 202015929290
(43) Date of publication of application: 27.10.2021
(73) Proprietor: Sure Grip Controls, Inc., Saanichton, British Columbia V8M 2A4 (CA)
(72) Inventor: Leckenby, Stephen, Victoria, V8V4W5 (CA)
(74) Representative: Boult Wade Tennant LLP

(56) References cited:
- EP-A2- 3 264 217
- CN-U- 209 231 808
- DE-U1- 202006 016 583
- US-A- 4 688 444
- US-A1- 2007 199 762
- US-A1- 2014 102 241

## Description

### FIELD

This invention relates to the field of joysticks. More particularly, this invention relates to a single axis joystick.

### INTRODUCTION

Joysticks are in common use throughout a variety of different fields. A typical joystick provides an operator with the ability to control the movement of a connected object, be that object physical or virtual. For example, a joystick can be configured to move the hydraulic arm of a backhoe or a character in a video game. Some joysticks enable motion of the connected object in three dimensions, some in two dimensions, and some in one dimension. This disclosure predominantly pertains to single-dimension joysticks.

Most joysticks have a mechanical component - the operator controls the joystick by physically moving some mechanical element of the joystick. This physical movement within the joystick tends to lead to mechanical degradation of one or more parts of the joystick, which tends to be a major mode of failure of joysticks.

Similarly, most joysticks also have an electronic component - once the operator physically moves an element of the joystick, that movement is electronically sensed and relayed to other components. The electronic sensing of the mechanical movement is often performed at close proximity to the mechanically moving elements, which tends to introduce challenges into the design of the joystick.

What is needed, therefore, is a design for a joystick that tends to reduce, at least in part, issues such as those described above.

EP-A-3264217 discloses a lever operation device. A guide hole of an operation portion of an operation body is inserted with a tactile pin having, at a top end, an abutting-end portion abutting an abutting-target surface of a cam in a casing. When a lever of the operation body is operated to change a position of a top end portion of the operation portion, the abutting-end portion slides on the abutting-target surface. The tactile pin has, on an outer peripheral surface, a first inclined surface (pin outer periphery inclined surface). The guide hole has, on an inner peripheral surface, at a position facing the first inclined surface, a second inclined surface (guide hole inner periphery inclined surface). Normal directions of the first inclined surfaces and second inclined surfaces are inclined with respect to operation directions of the lever. The tactile pin is biased in the guide hole so that the first and second inclined surfaces abut each other.

DE-U-202006016583 discloses a housing and a framework comprising a base module in which a logic element is provided. The logic element adjusts the electrical or mechanical switching condition. A coupling connects a switching mechanism with at least one module e.g. giver module, switch module that is operated by the logic element through the coupling.

US-A-2014/102241 discloses a lever shift control cable assembly. The assembly includes a casing having two halves defining a chamber there between and a lever shifter movably mounted between the two halves of the casing for pivotal movement, wherein the lever shifter configured for to and fro movement. The assembly has a roller-spring-sleeve unit operatively connected to the lever shifter for controlling the lever shifter. The assembly further has four numbers of snap fit units each comprising a flat spring configures into a U-shaped nylon molded part have been inserted into left and right covers to retain the casing to the panel. The assembly also has a cable assembly mounted on an abutment, wherein the abutment is housed within the casing by a snap fit and coupled to the lever shifter on one end and a control cable connected to the casing through the abutment through a hole in the casing on the other end.

### SUMMARY

The above and other needs are met by a joystick with a first casing section that has a first piece only of a sensor/effector pair having two pieces. A second casing section is attached to the first casing section, where at least one of the first and second casing sections form a cylindrical void within the first and second casing sections. A puck with a cylindrical shape is disposed within the cylindrical void, where the puck has a second piece only of the sensor/effector pair. A shaft is connected to the puck by a first end, with a distal second end free to move in a first dimension, thereby rotating the puck within the first and second casing sections. The shaft passes through a first void formed between the first and second casing sections, and as the shaft is moved in the first dimension and the puck rotates, an interaction between the first and second pieces of the sensor/effector pair produces a signal indicating a degree of movement of the shaft. Electrical wires are disposed in the puck, with a first wire connected to a control element disposed near the second end of the shaft, and a second wire connected to the second piece of the sensor/effector pair in the puck, and at least one of the first and second wires exiting the puck through a second void formed between the first and second casing sections.

In various embodiments according to this aspect of the invention, the sensor/effector pair is a magnet and a Hall sensor. In some embodiments, the sensor/effector pair comprises an alignment marking and an optical sensor. In some embodiments, the sensor/effector pair comprises a surface and a roller. In some embodiments, an interior of the puck is substantially hollow.

In some embodiments, a first portion of a positioning mechanism disposed is on the second casing section and a second portion of the positioning mechanism is disposed on the puck, wherein the positioning mechanism tends to releasably retain the puck in a desired position with respect to the second casing section. In some embodiments, the positioning mechanism includes a spring-loaded ball and a detent that releasably engage one another. In some embodiments, the positioning mechanism includes a leaf spring and a surface that releasably engage one another. In some embodiments, the positioning mechanism tends to releasably retain the puck in a centered position with respect to the second casing section.

### DRAWINGS

Further advantages of the invention are apparent by reference to the detailed description when considered in conjunction with the figures, which are not to scale so as to more clearly show the details, wherein like reference numbers indicate like elements throughout the several views, and wherein:
Fig. 1 is an external perspective view of a joystick according to an embodiment of the present invention.
Fig. 2 is a partially-dissembled perspective view of a joystick according to an embodiment of the present invention.
Fig. 3 is a top plan view of a first portion of a casing of a joystick according to an embodiment of the present invention.
Fig. 4 is a top plan view of a first side of a puck of a joystick according to an embodiment of the present invention.
Fig. 5 is a top plan view of a second portion of a casing of a joystick according to an embodiment of the present invention.
Fig. 6 is a perspective view of a second side of a puck of a joystick according to an embodiment of the present invention.

### DESCRIPTION

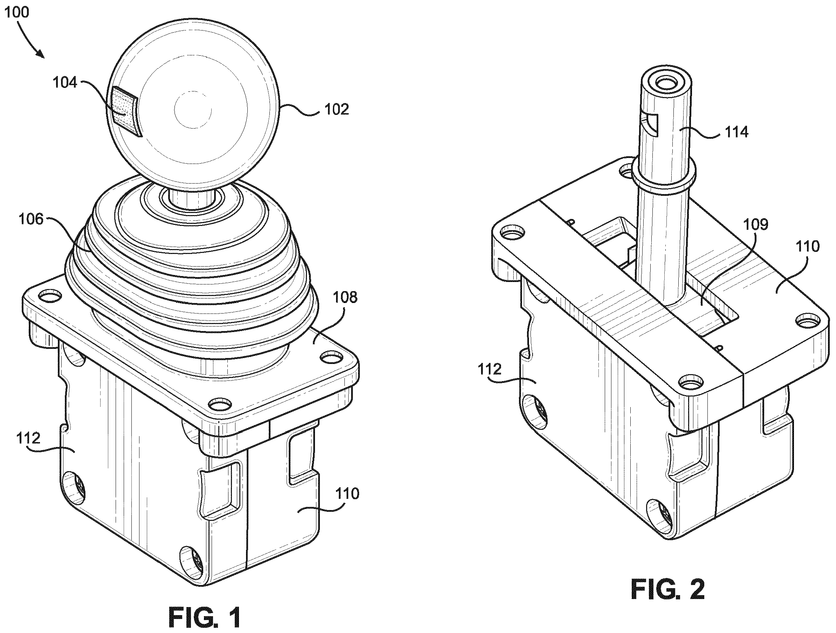

With reference now to Fig. 1, there is depicted a joystick 100, which in the embodiments depicted in the figures is a single-axis joystick 100, meaning that the joystick 100 moves in one dimension. In various embodiments, the joystick 100 includes a handle 102 of some type, such as can be grasped by an operator, and some type of control element 104, such as an electrical switch or button. A pliable boot 106 is attached to a top plate 108 of the joystick 100 casing, so as to allow movement of portions of the joystick 100 while preventing debris from entering the moving portions inside the joystick 100. In the embodiment depicted, the casing of the joystick 100 is formed substantially of two sections, being a first section 112 and a second section 110.

As depicted in Fig. 2, the handle 102 has been removed from the joystick 100, as well as the boot 106 and the top plate 108. In this configuration, a shaft 114 is visible, which passes into the casing through a first void 109, which is formed between the first section 112 and the second section 110 of the casing.

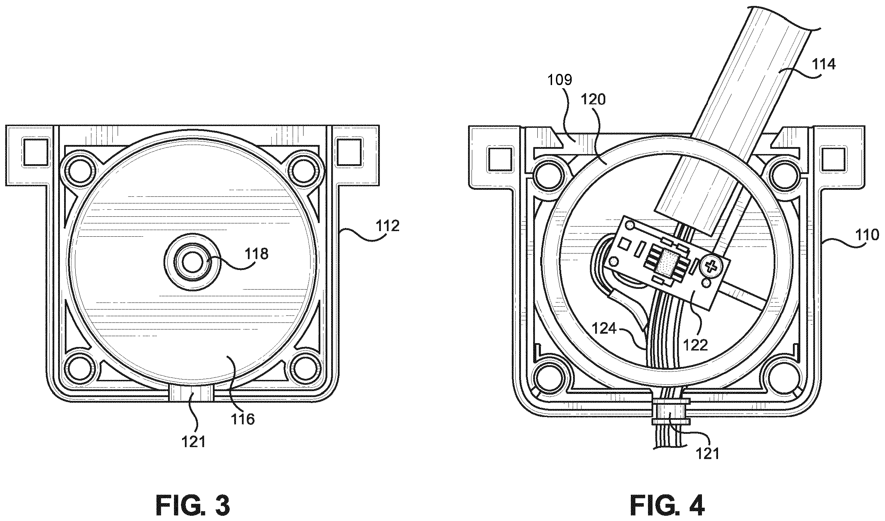

With reference now to Fig. 3, there is depicted an interior top plan view of the first section 112 of the casing, which has been removed from the second section 110 of the casing. As depicted in this embodiment, a portion of a cylindrical void 116 is formed in the interior of the first section 112. Disposed within the portion of the cylindrical void 116 in the first section 112 is a first piece 118 of a sensor/effector pair.

Fig. 4 depicts the first side of a puck 120, disposed with the second portion of the void 116 in the second section 110 of the casing. The second piece 122 of the sensor/effector pair is attached to the puck 120. As depicted in the figures, the cylindrical void 116 is partially formed in each of the first section 112 and the second section 110. In various embodiments, however, the void 116 could be substantially formed in one or another of the first section 112 and the second section 110. Regardless of the degree of formation of the cylindrical void 116 between the first section 112 and the second section 110, the puck 120 is able to rotate within the cylindrical void 116 in one dimension only, as acted upon by the movement of the shaft 114.

**In** various embodiments, the puck 120 is formed as a substantially hollow cylinder, with open ends and, in some embodiments, some type of structure on the inside of the cylinder. For example, the structure could be a plate that is disposed cross-sectionally to the general cylindrical shape of the puck 120, which plate could be disposed centrally along the depth of the cylindrical shape of the puck 120, or nearer to one end of the puck 120 than the other. In some embodiments, voids are formed in portions of the plate. In other embodiments the structure could be one or more spokes that extend partially or fully across a diameter of the cylindrical shape of the puck 120.

Disposed within the puck 120 is a second piece 122 of the sensor/effector pair. The two pieces 118 and 122 of the sensor/effector pair are positioned in the first section 112 and the puck 120, respectively, such that they are adjacent one another when the first section 112 and the second section 110 of the casing are put together. In the embodiment as depicted in the figures, this position is a center of rotation of the puck 120. However, in other embodiments the position might be radially outward from the center, or even on a peripheral surface of the puck 120 and the first section 112. Such variations in the positions of the first piece 118 and the second piece 122 are dependent, at least in part, upon the type of sensor/effector pair that is used.

**In** various embodiments, the sensor/effector pair is a magnet and Hall sensor, where the rotation of the magnetic field relative to the Hall sensor can be detected by the Hall sensor and interpreted as to the degree of rotation. In other embodiments, the sensor/effector pair is an alignment marking and an optical sensor that reads the relative movement of the alignment marking and interprets the degree of rotation. In yet another embodiment, the sensor/effector pair is a surface and a roller that engages the surface, which roller is read with an electronic or mechanical means to determine the relative degree of rotation. In various embodiment, either one or the other of the two pieces of the sensor/effector pair can be on either one of the first section 112 or the puck 120.

**In** the embodiment as depicted, a permanent magnet 118 is disposed substantially in the radial center of a portion of the cylindrical void 116 in the first section 112 of the casing, and a Hall sensor 122 is disposed substantially in the radial center of the puck 120, such that when the first section 112 of the casing is connected to the second section 110 of the casing, the magnet 118 is disposed in close proximity to the Hall sensor 122, and any forward or backward movement of the shaft 114 will cause the puck 120 to rotate, and produce relative rotational movement between the magnet 118 and the Hall sensor 122, which can be electronically read by the Hall sensor 122, and a signal can be provided.

In that regard, signals from the second piece 122 of the sensor/effector pair can be routed along one or more wires 124, and exit the joystick 100 through a second void 121 formed in either one of or between both of the first section 112 and the second section 110 of the casing. Signals from the control element 104 can also be routed through wires 124 down through the shaft 114 and into the central portion of the puck 120, and then routed out of the puck 120 and the joystick 100 through the second void 121.

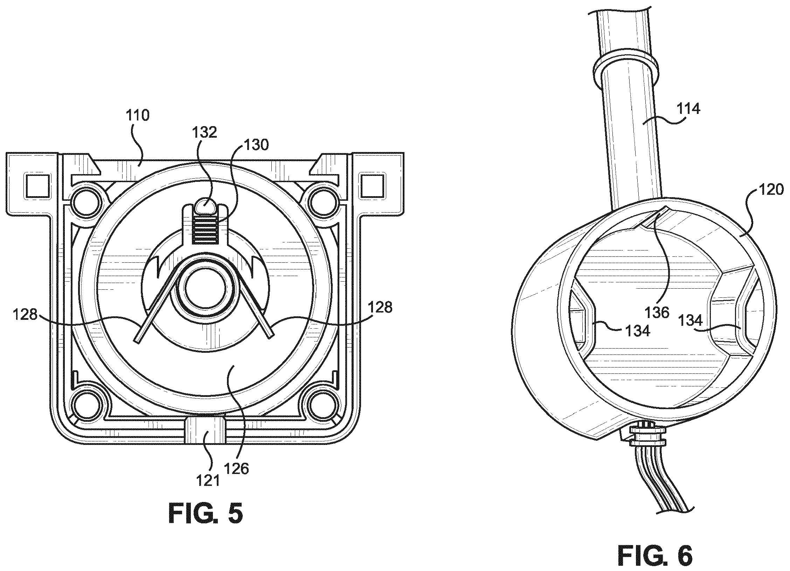

With reference now to Fig. 5, there is depicted the second section 110 of the joystick 100, such as in the orientation as depicted in Fig. 4, but with the assembly of the puck 120 and the shaft 114 removed and turned over, as depicted in Fig. 6. Thus, Fig. 5 depicts the interior top plan view of the second section 110, and Fig. 6 depicts the second side of the puck 120 which, when the joystick 100 is assembled, is disposed so as to be facing the interior of the second section 110 of the casing of the joystick 100.

Figs. 5 and 6 depict various portions and embodiments of positioning mechanisms, where the positioning mechanism tends to releasably retain the puck 120 in a desired position with respect to the second casing section 120. In some embodiments, the positioning mechanism releasably retains the puck 120 and the shaft 114 in a substantially centered position (equidistant between the two ends of the first void 109) with respect to the second casing section 120. Although two different types of positioning mechanisms are depicted in Figs. 5 and 6, it is appreciated that a greater or lesser number of positioning mechanisms could be used in various embodiments, and that other types of positioning mechanisms could be used. Further, the different parts of the positioning mechanisms could be disposed on the second section 110 and the puck 120 differently from that as depicted.

As depicted in Figs. 5 and 6, one of the positioning mechanisms is a ball 132 and spring 130 disposed on one element, and a detent 136 disposed on the other element, into which detent 136 the ball 132 is pushed by the spring 130. Thus, when the puck 120 is rotated into a desired position where the ball 132 and detent 136 engage, the pressure of the spring 130 tends to keep the puck 120 in that position, albeit with a degree of force that is relatively easy for an operator of the joystick to overcome when so desired.

Another of the positioning mechanisms is a leaf spring 128 disposed on one element, and surfaces 134 disposed on the other element, where the ends of the leaf spring 128 are flexed to greater or lesser degrees depending upon the position of the surfaces 134 against which they are pressing, as determined by the rotation of the puck 120. Thus, when an operator releases the handle 102, or otherwise sufficiently relaxes his grip on the joystick 100, the flexing of the leaf springs 128 will tend to rotate the puck 120 so as to reduce the total amount of force exerted between the leave springs 128 and the surfaces 134, or in some embodiments, to balance the forces exerted between the two leaf springs 128 and the two surfaces 134. Thus, in various embodiments, one or more positioning mechanisms can be used to both return the puck 120 and shaft 114 to a desired position and then help retain the puck 120 and shaft 114 in the desired position, relative to the second section 110 of the casing.

The foregoing description of embodiments for this invention has been presented for purposes of illustration and description. It is not intended to be exhaustive or to limit the invention to the precise form disclosed. Obvious modifications or variations are possible in light of the above teachings. The embodiments are chosen and described in an effort to provide illustrations of the principles of the invention and its practical application, and to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. A joystick (100), comprising:
a first casing section (112) having a first piece (118) only of a sensor/effector pair having two pieces,
a second casing section (110),
the first casing section (112) attached to the second casing section (110), where at least one of the first and second casing sections (112,110) form a cylindrical void (116) within the first and second casing sections (110,112),
a puck (120) having a cylindrical shape, the puck (120) disposed within the cylindrical void (116), the puck (120) having a second piece (122) only of the sensor/effector pair, and
a shaft (114) having a first end connected to the puck (120) and a distal second end free to move in a first dimension and thereby rotating the puck (120) within the first and second casing sections (110,112), the shaft (114) passing through a first void (109) formed between the first and second casing sections (110,112),
wherein when the shaft (114) is moved in the first dimension and the puck (120) rotates, an interaction between the first and second pieces (118,122) of the sensor/effector pair produces a signal indicating a degree of movement of the shaft (114); the joystick being **characterized by** further comprising
electrical wires (124) in the puck (120), a first wire connected to a control element (104) disposed near the second end of the shaft (114), and a second wire connected to the second piece (122) of the sensor/effector pair in the puck (120), and at least one of the first and second wires exiting the puck (120) through a second void (121) formed between the first and second casing sections (110,112).

2. The joystick (100) of claim 1, wherein the sensor/effector pair comprises:
a magnet (118) and a Hall sensor (122); and/or
an alignment marking and an optical sensor; and/or.
a surface and a roller.

3. The joystick (100) of claim 1 or 2, wherein an interior of the puck (120) is substantially hollow.

4. The joystick (100) of any preceding claim, further comprising a first portion of a positioning mechanism disposed on the second casing section (110) and a second portion of the positioning mechanism disposed on the puck (120), wherein the positioning mechanism tends to releasably retain the puck (120) in a desired position with respect to the second casing section (110).

5. The joystick (100) of claim 4, wherein the positioning mechanism comprises:
a spring-loaded ball (130,132) and a detent (136) that releasably engage one another; and/or
a leaf spring (128) and a surface (134) that releasably engage one another.

6. A joystick (100) according to claim 1:
the two pieces of the sensor/effector pair comprising a magnet (118) and a Hall sensor (122),
the second casing section (110) having a first portion of a positioning mechanism, and
the puck (120) having a second portion of the positioning mechanism, wherein the positioning mechanism tends to releasably retain the puck (120) in a desired position with respect to the second casing section (110).

7. The joystick (100) of claim 6, wherein an interior of the puck (120) is substantially hollow.

8. The joystick (100) of claim 6 or 7, wherein the positioning mechanism comprises:
a spring-loaded ball (130,132) and a detent (136) that releasably engage one another; and/or
a leaf spring (128) and a surface (124) that releasably engage one another.

9. The joystick (100) of any of claims 4 to 8, wherein the positioning mechanism tends to releasably retain the puck (120) in a centered position with respect to the second casing section (110).

10. A joystick (100) according to claim 6:
the first portion of the positioning mechanism comprising a spring-loaded ball (130,132) and a leaf spring (128), and
the second portion of the positioning mechanism comprising a detent (136) and a surface (124),
wherein the spring-loaded ball (130,132) and the detent (136) releasably engage one another, and the leaf spring (128) and the surface (124) releasably engage one another.

11. The joystick of claim 10, wherein an interior of the puck (120) is substantially hollow.

12. The joystick of claim 10 or 11, wherein the positioning mechanism tends to releasably retain the puck (120) in a centered position with respect to the second casing section (110).

## Patentansprüche

1. Joystick (100), umfassend:
ein erstes Gehäusesegment (112), das nur ein erstes Teil (118) eines Sensor/Effektor-Paars aufweist, das zwei Teile aufweist,
ein zweites Gehäusesegment (110),
das erste Gehäusesegment (112), das an dem zweiten Gehäusesegment (110) befestigt ist, wobei mindestens eines des ersten und zweiten Gehäusesegments (112, 110) einen zylindrischen Hohlraum (116) innerhalb des ersten und zweiten Gehäusesegments (110, 112) bildet,
einen Puck (120), der eine zylindrische Form aufweist, wobei der Puck (120) innerhalb des zylindrischen Hohlraums (116) angeordnet ist, wobei der Puck (120) nur ein zweites Teil (122) des Sensor/Effektor-Paars aufweist, und
eine Welle (114), die ein erstes Ende, das mit dem Puck (120) verbunden ist, und ein distales zweites Ende aufweist, das frei ist, sich in einer ersten Dimension zu bewegen und dadurch den Puck (120) innerhalb des ersten und zweiten Gehäusesegments (110, 112) zu drehen, wobei die Welle (114) durch einen ersten Hohlraum (109) verläuft, der zwischen dem ersten und zweiten Gehäusesegment (110, 112) gebildet wird,
wobei, wenn die Welle (114) in der ersten Dimension bewegt wird und der Puck (120) sich dreht, eine Interaktion zwischen dem ersten und zweiten Teil (118, 122) des Sensor/Effektor-Paars ein Signal erzeugt, das einen Bewegungsgrad der Welle (114) angibt; wobei der Joystick ferner **dadurch gekennzeichnet ist, dass** er umfasst
elektrische Drähte (124) im Puck (120), wobei ein erster Draht mit einem Steuerelement (104) in der Nähe des zweiten Endes der Welle (114) verbunden ist und ein zweiter Draht mit dem zweiten Teil (122) des Sensor/Effektor-Paars im Puck (120) verbunden ist, und mindestens einer des ersten und zweiten Drahts den Puck (120) durch einen zweiten Hohlraum (121) verlässt, der zwischen dem ersten und dem zweiten Gehäusesegment (110, 112) gebildet wird.

2. Joystick (100) nach Anspruch 1, wobei das Sensor/Effektor-Paar umfasst:
einen Magnet (118) und ein Hall-Sensor (122); und/oder
eine Ausrichtungsmarkierung und einen optischen Sensor; und/oder
eine Oberfläche und eine Walze.

3. Joystick (100) nach Anspruch 1 oder 2, wobei ein Inneres des Pucks (120) im Wesentlichen hohl ist.

4. Joystick (100) nach einem vorstehenden Anspruch, ferner umfassend einen ersten Abschnitt eines Positioniermechanismus, der auf dem zweiten Gehäusesegment (110) angeordnet ist, und einen zweiten Abschnitt des Positioniermechanismus, der auf dem Puck (120) angeordnet ist, wobei der Positioniermechanismus dazu neigt, den Puck (120) in einer gewünschten Position in Bezug auf das zweite Gehäusesegment (110) lösbar zu halten.

5. Joystick (100) nach Anspruch 4, wobei der Positionierungsmechanismus umfasst:
eine federbelastete Kugel (130, 132) und eine Arretierung (136), die lösbar ineinandergreifen; und/oder
eine Blattfeder (128) und eine Oberfläche (134), die lösbar ineinandergreifen.

6. Joystick (100) nach Anspruch 1:
wobei die zwei Teile des Sensor/Effektor-Paars einen Magneten (118) und einen Hall-Sensor (122) umfassen,
das zweite Gehäusesegment (110) einen ersten Abschnitt eines Positionierungsmechanismus aufweist, und
der Puck (120) einen zweiten Abschnitt des Positioniermechanismus aufweist, wobei der Positioniermechanismus dazu neigt, den Puck (120) in einer gewünschten Position in Bezug auf das zweite Gehäusesegment (110) lösbar zu halten.

7. Joystick (100) nach Anspruch 6, wobei ein Inneres des Pucks (120) im Wesentlichen hohl ist.

8. Joystick (100) nach Anspruch 6 oder 7, wobei der Positionierungsmechanismus umfasst:
eine federbelastete Kugel (130, 132) und eine Arretierung (136), die lösbar ineinandergreifen; und/oder
eine Blattfeder (128) und eine Oberfläche (124), die lösbar ineinandergreifen.

9. Joystick (100) nach einem der Ansprüche 4 bis 8, wobei der Positioniermechanismus dazu neigt, den Puck (120) in einer zentrierten Position in Bezug auf das zweite Gehäusesegment (110) lösbar zu halten.

10. Joystick (100) nach Anspruch 6:
wobei der erste Abschnitt des Positioniermechanismus eine federbelastete Kugel (130, 132) und eine Blattfeder (128) umfasst, und
der zweite Abschnitt des Positionierungsmechanismus eine Arretierung (136) und eine Oberfläche (124) umfasst,
wobei die federbelastete Kugel (130, 132) und die Arretierung (136) lösbar ineinandergreifen, und die Blattfeder (128) und die Oberfläche (124) lösbar ineinandergreifen.

11. Joystick nach Anspruch 10, wobei ein Inneres des Pucks (120) im Wesentlichen hohl ist.

12. Joystick (100) nach Anspruch 10 oder 11, wobei der Positioniermechanismus dazu neigt, den Puck (120) in einer zentrierten Position in Bezug auf das zweite Gehäusesegment (110) lösbar zu halten.

## Revendications

1. Manette de jeu (100), comprenant :
une première section de boîtier (112) ne présentant qu'une première pièce (118) d'une paire détecteur/effecteur présentant deux pièces,
une seconde section de boîtier (110),
la première section de boîtier (112) attachée à la seconde section de boîtier (110), où au moins une des première et seconde sections de boîtier (112,110) forment un vide cylindrique (116) à l'intérieur des première et seconde sections de boîtier (110,112),
un palet (120) présentant une forme cylindrique, le palet (120) étant disposé à l'intérieur du vide cylindrique (116), le palet (120) ne présentant qu'une seconde pièce (122) de la paire détecteur/effecteur, et
une tige (114) présentant une première extrémité reliée au palet (120) et une seconde extrémité distale libre de se déplacer dans une première dimension et faisant ainsi tourner le palet (120) à l'intérieur des première et seconde sections de boîtier (110,112), la tige (114) passant à travers un premier vide (109) formé entre les première et seconde sections de boîtier (110,112),
dans laquelle, lorsque la tige (114) se déplace dans la première dimension et que le palet (120) tourne, une interaction entre les première et seconde pièces (118, 122) de la paire détecteur/effecteur produit un signal indiquant un degré de déplacement de la tige (114) ; la manette de jeu étant **caractérisée en ce qu'**elle comprend en outre :
des fils électriques (124) dans le palet (120), un premier fil relié à un élément de commande (104) disposé près de la seconde extrémité de la tige (114), et un second fil relié à la seconde pièce (122) de la paire détecteur/effecteur dans le palet (120), et au moins un des premier et second fils sortant du palet (120) à travers un second vide (121) formé entre les première et seconde sections de boîtier (110,112).

2. Manette de jeu (100) selon la revendication 1, dans laquelle la paire détecteur/effecteur comprend :
un aimant (118) et un capteur à effet Hall (122) ; et/ou
un marquage d'alignement et un capteur optique ; et/ou
une surface et un rouleau.

3. Manette de jeu (100) selon la revendication 1 ou 2, dans laquelle l'intérieur du palet (120) est sensiblement creux.

4. Manette de jeu (100) selon une quelconque revendication précédente, comprenant en outre une première partie d'un mécanisme de positionnement disposée sur la seconde section de boîtier (110) et une seconde partie du mécanisme de positionnement disposée sur le palet (120), dans laquelle le mécanisme de positionnement tend à retenir de manière amovible le palet (120) dans une position souhaitée par rapport à la seconde section de boîtier (110).

5. Manette de jeu (100) selon la revendication 4, dans laquelle le mécanisme de positionnement comprend :
une bille à ressort (130,132) et un cran (136) qui viennent en prise l'un dans l'autre de manière amovible ; et/ou
un ressort à lames (128) et une surface (134) qui viennent en prise l'un dans l'autre de manière amovible.

6. Manette de jeu (100) selon la revendication 1 :
les deux pièces de la paire détecteur/effecteur comprenant un aimant (118) et un capteur à effet Hall (122),
la seconde section de boîtier (110) présentant une première partie d'un mécanisme de positionnement, et
le palet (120) présentant une seconde partie du mécanisme de positionnement, dans laquelle le mécanisme de positionnement tend à retenir de manière amovible le palet (120) dans une position souhaitée par rapport à la seconde section de boîtier (110).

7. Manette de jeu (100) selon la revendication 6, dans laquelle l'intérieur du palet (120) est sensiblement creux.

8. Manette de jeu (100) selon la revendication 6 ou 7, dans laquelle le mécanisme de positionnement comprend :
une bille à ressort (130,132) et un cran (136) qui viennent en prise l'un dans l'autre de manière amovible ; et/ou
un ressort à lames (128) et une surface (124) qui viennent en prise l'un dans l'autre de manière amovible.

9. Manette de jeu (100) selon l'une quelconque des revendications 4 à 8, dans lequel le mécanisme de positionnement tend à retenir de manière amovible le palet (120) dans une position centrée par rapport à la seconde section de boîtier (110).

10. Manette de jeu (100) selon la revendication 6 :
la première partie du mécanisme de positionnement comprenant une bille à ressort (130,132) et un ressort à lames (128), et
la seconde partie du mécanisme de positionnement comprenant un cran (136) et une surface (124),
dans laquelle la bille à ressort (130,132) et le cran (136) viennent en prise l'un dans l'autre de manière amovible, et le ressort à lames (128) et la surface (124) viennent en prise l'un dans l'autre de manière amovible.

11. Manette de jeu selon la revendication 10, dans laquelle l'intérieur du palet (120) est sensiblement creux.

12. Manette de jeu selon la revendication 10 ou 11, dans lequel le mécanisme de positionnement tend à retenir de manière amovible le palet (120) dans une position centrée par rapport à la seconde section de boîtier (110).
